# EUROPÄISCHE PATENTSCHRIFT

(11) **EP 0 527 765 B1**
(45) Veröffentlichungstag und Bekanntmachung des Hinweises auf die Patenterteilung: **19.01.1994**
(21) Anmeldenummer: 91907511.9
(22) Anmeldetag: 09.04.1991
(51) Int. Cl.: E01C 9/04, E01C 5/18, B29C 43/14

(54) **VERFAHREN ZUR HERSTELLUNG EINER GLEISÜBERGANGSEINRICHTUNG**
METHOD FOR PRODUCING A CROSSING DEVICE
PROCEDE DE FABRICATION D'UN DISPOSITIF DE TRAVERSEE DES RAILS

(30) Priorität: 10.04.1990 DE 4011599
(43) Veröffentlichungstag der Anmeldung: 24.02.1993
(73) Patentinhaber: GUMMIWERK KRAIBURG DEVELOPMENT GmbH, D-84478 Waldkraiburg (DE)
(72) Erfinder: SCHMIDT, Peter, D-84478 Waldkraiburg (DE)
(74) Vertreter: Weickmann, Heinrich, Dipl.-Ing.
(86) Internationale Anmeldenummer: EP9100670
(87) Internationale Veröffentlichungsnummer: WO9115631

(56) Entgegenhaltungen:
- DE-A- 2 540 193
- DE-A- 2 551 345
- DE-A- 2 727 644
- DE-A- 3 707 305
- DE-U- 8 632 856
- GB-A- 225 807
- GB-A- 446 059
- US-A- 3 022 712
- US-A- 3 597 425
- US-A- 3 894 686
- US-A- 4 160 761
- US-A- 4 365 743

## Beschreibung

Die Erfindung betrifft ein Verfahren zur Herstellung einer Gleisübergangseinrichtung durch Ausformen von Formkörpern mit Gummigehalt und anschließendes Verlegen der Formkörper über einem Gleisrost und/oder einem Bettungsmaterial einer Gleisanlage.

Eine solche Gleisübergangseinrichtung ist aus der DE-A-27 27 644 bekannt. Bei dieser bekannten Einrichtung dient eine erste Gruppe von plattenförmigen Formkörpern zum Auslegen des Flächenbereichs zwischen zwei zusammengehörigen Schienen und eine zweite Gruppe von plattenförmigen Formkörpern zum Belegen der Flächenbereiche jeweils außerhalb der beiden Schienen. Die plattenförmigen Formkörper werden dabei auf dem Bettungsmaterial verlegt. Die plattenförmigen Formkörper der ersten Gruppe sind zum Untergreifen der Schienenköpfe der beiden Schienen ausgebildet. Sie werden unter elastischer Verformung in Querrichtung zu den Schienen komprimiert, nachdem sie unter den Schienenkopf der einen Schiene eingeschoben sind und schnappen dann auch unter den Schienenkopf der jeweils anderen Schiene ein. Die plattenförmigen Formkörper der anderen Gruppe werden unter den Schienenkopf der jeweils zugehörigen Schiene eingeschoben und längs ihres schienenfernen Randes durch die angrenzende Schicht einer Fahrbahn festgelegt.

Die aus der DE-A-27 27 644 bekannten plattenförmigen Formkörper werden insbesondere dann eingesetzt, wenn es darum geht, Gleisübergänge zu schaffen, die auch von Schwerlastfahrzeugen befahren werden.

Aus der deutschen Offenlegungsschrift DE-A-37 07 305 ist eine Gleisübergangseinrichtung der eingangs bezeichneten Art bekannt, bei welcher die plattenförmigen Formkörper mit geringerer Plattenstärke ausgeführt werden. Diese Platten kommen insbesondere dann zum Einsatz, wenn die Gleisübergänge nur für Fußgängerverkehr und Fahrzeuge geringerer Last bestimmt sind.

Beide Lösungen haben sich in der Praxis hervorragend bewährt. Jedoch hat sich die Herstellung von Gleisübergängen aus Formkörpern auf Gummibasis bisher als relativ teuer erwiesen.

Aus der US-A- 3 894 686 ist weiter ein Verfahren zur Herstellung einer Gleisübergangseinrichtung bekannt, bei welchem auf der Oberseite des Gleisrosts und des zwischen den Schwellen des Gleisrosts verfüllten Bettungsmaterials in situ in zwei Schichten übereinander Formkörper gebildet werden, und zwar sowohl zwischn den zwei benachbarten Schienen als auch außerhalb beider Schienen. Dabei wird in einer ersten Schicht eine härtbare Basisschicht-Komposition in situ vergossen. Diese härtbare Basisschicht-Komposition wird als eine Mischung von zerkleinerten Gummiabfällen und einem härtbaren Harz bereitgestellt. Die Konsistenz der Basisschicht-Komposition wird so eingestellt, daß ein Teil der Basisschicht-Komposition die Schwellen 24 und das Bettungsmaterial benetzt und dabei wenigstens teilweise zwischen die einzelnen Teilchen des Bettungsmaterials hineinfließt und ein im wesentlichen kontinuierlich zusammenhängendes Netzwerk von luftvermischter Flüssigkeit bildet. Nach der Aushärtung der Basisschicht bildet das flüssige Netzwerk elastische Brücken zwischen einzelnen Teilchen des Bettungsmaterials, welche das Bettungsmaterial stabilisieren und zusammenhalten. Auf der Oberseite der so gebildeten Basisschicht wird eine elastische Verschleißschicht in situ vergossen, und zwar aus einer Verschleißschicht-Komposition. Als Verschleißschicht-Komposition wird eine Mischung von feinzerteiltem Gummi und härtbarem Harz verwendet. Diese Verschleißschicht-Komposition kann ähnlich oder verschieden sein von der Basisschicht-Komposition, sofern nur die Wärmeausdehnungskoeffizienten der Basisschicht und der Verschleißschicht miteinander kompatibel bleiben. Die notwendigen Ausnehmungen für die Spurflansche der schienengängigen Räder werden dabei beim Vergießen dadurch geformt, daß komplementäre Formkörper an den Innenseiten der Schienen verlegt werden, bevor die Verschleißschicht vergossen wird. Nach der Aushärtung der Verschleißschicht steht eine glatte Straßenoberfläche zur Verfügung.

Bei diesem bekannten Verfahren kann zumindest die Basisschicht aus Gummiabfallteilchen bestehen. Dieses bekannte Verfahren ist indes von der Verfahrensdurchführung her unbefriedigend. Wenn die Schichten, d. h. die Basisschicht und die Verschleißschicht, in situ an der Gleisanlage vergossen werden, so führt der Vergußvorgang und der Aushärtungsvorgang an der Gleisanlage zu längeren Unterbrechungszeiten, während welcher der Schienenverkehr an der Gleisanlage unterbrochen werden muß. Dies mag hinnehmbar sein, wenn die Gleisübergangseinrichtung im Zuge der Neuerstellung einer Gleisanlage gebaut wird. Dies ist aber nicht akzeptabel, wenn an einer bereits erstellten Gleisanlage nachträglich eine Gleisübergangseinrichtung neu montiert oder repariert werden soll.

Der Erfindung liegt die Aufgabe zugrunde, ein Verfahren zur Herstellung einer Gleisübergangseinrichtung gattungsgemäßer Art anzugeben, welches sich wirtschaftlich durchführen läßt gleichzeitig aber die Vorteile des nachträglichen Verlegens von außerhalb der Gleisanlage gewonnenen Formkörpern erhält.

Zur Lösung dieser Aufgabe wird eine erste erfindungsgemäße Verfahrensweise vorgeschlagen, welch vorsieht, daß die Formkörper in ihrem Kernbereich unter Verwendung von teilchenförmigem, vulkanisiertem Altgummimaterial und an mindestens einer verkehrsbelasteten Seitenfläche mit einer im wesentlichen geschlossenen Deckhaut in der Weise hergestellt werden, daß man eine Form wenigstens teilweise mit einer Vulkanisationsmittel enthaltenden Rohgummischicht auslegt, daß man das Restvolumen der Form sodann mit einer Mischung von teilchenförmigem, vulkanisiertem Altgummimaterial und einem Bindemittel füllt und daß man sodann unter Wärme und Druck die Rohgummischicht unter Herstellung einer Verbindung mit der Mischung vulkanisiert und das Bindemittel erhärten läßt.

Darüberhinaus wird eine zweite erfindungsgemäße Verfahrensweise vorgeschlagen, welche vorsieht, daß die Formkörper unter Verwendung von teilchenförmigem, vulkanisiertem Altgummimaterial hergestellt werden in der Weise, daß man eine Mischung von teilchenförmigem, vulkanisiertem Altgummimaterial und thermoplastifiziertem Bindemittel in zähplastischem Zustand in eine Form bringt, welche auf eine erhöhte, aber unterhalb des Erweichungspunkts des thermoplastifizierten Bindemittels liegende Temperatur eingestellt ist, daß man diese Mischung unter Druck innerhalb der Form verteilt und daß man den so entstandenen Formkörper nach Abkühlung auf eine Temperatur unterhalb des Erweichungspunkts des thermoplastifizierten Bindemittels aus der Form entnimmt und sodann weiter abkühlt.

Teilchenförmiges, vulkanisiertes Altgummimaterial kann relativ kostengünstig bereitgestellt werden durch Zerkleinern von Altgummiabfällen. Altgummiabfälle stehen in reichlichem Maße zur Verfügung, beispielsweise fallen sie bei der Runderneuerung von Fahrzeugreifen an. Bei dieser Runderneuerung werden die Gummidecken der Reifen abgetragen. Diese Gummidecken können in einem sog. Shredder oder in einer Mühle auf beliebige Körnchengröße zerkleinert werden. Das zerkleinerte Material erweist sich als geeignet zur Herstellung der für Gleisübergänge benötigten Formkörper. Weiterhin fällt vulkanisierter Altgummi auch in gummiverarbeitenden Betrieben in reichlichem Maße in Form von Produktionsabfällen an. Dadurch, daß das teilchenförmige, vulkanisierte Altgummimaterial mittels eines Bindemittels gebunden wird, erhält man Formkörper, die in ihren Elastizitätseigenschaften herkömmlichen Formkörpern, welche insgesamt auf Rohgummibasis gewonnen wurden, zumindest gleichwertig beim Einsatz für Gleisübergangseinrichtungen sind. Durch die Wahl des jeweiligen Bindemittels können die Elastizitätseigenschaften weitgehender entsprechend den Anforderungen der Praxis variiert werden.

Die erfindungsgemäß hergestellten Formkörper können in verschiedenen Formen ausgeformt werden. So lassen sich Formkörper der oben genannten ersten Gruppe und der oben genannten zweiten Gruppe in großer Plattenstärke für Gleisübergänge herstellen, die zum Befahren durch Schwerlastfahrzeuge bestimmt sind. Es lassen sich aber auch Formkörper der ersten und der zweiten Gruppe herstellen, die geringere Plattenstärke besitzen und insbesondere für Gleisübergänge zum Begehen durch Fußgänger und zum Befahren durch leichtere Fahrzeuge bestimmt sind. Daneben lassen sich auch Formkörper einer dritten Gruppe herstellen, die eine Hilfsfunktion erfüllen, indem sie ihrerseits den Schienenbefestigungsmitteln angepaßt sind, mittels welcher die Schienen an den sie tragenden Schwellen befestigt sind und andererseits die Formkörper der oben genannten ersten Gruppe zentrieren und teilweise tragen.

Es hat sich gezeigt, daß die erfindungsgemäß unter Verwendung von teilchenförmigem, vulkanisiertem Altgummimaterial hergestellten Formkörper ihre Aufgabe an Gleisübergangseinrichtungen dann besonders gut erfüllen, wenn das teilchenförmige, vulkanisierte Altgummimaterial durch das erhärtete Bindemittel zu einer im wesentlichen volumeninkompressiblen elastischen Masse gebunden ist, zu einer Masse also, die im wesentlichen frei von inneren Lufträumen ist.

Besonders günstige Elastizitäts- und Haltbarkeitseigenschaften des Formkörpers bzw. des Kernbereichs ergeben sich dann, wenn von dem Bindemittel eine einzelne Teilchen oder Teilchengruppen des Altgummimaterials im wesentlichen vollständig einschließende Matrix gebildet ist.

Um dem Formkörper an seiner Oberfläche möglichst günstige Oberflächeneigenschaften bezüglich Begehbarkeit, Befahrbarkeit und Haltbarkeit vermitteln zu können, wird weiter vorgeschlagen, daß der Formkörper an mindestens einer verkehrsbelasteten Seitenfläche eine im wesentlichen geschlossene Deckhaut aus vulkanisierter Rohgummimischung besitzt, welche mit dem Kernbereich verbunden ist.

Für die Haltbarkeitseigenschaften ist es darüber hinaus günstig, wenn der Formkörper von der Deckhaut im wesentlichen vollständig eingeschlossen ist, insbesondere deshalb, weil dann der Deckhaut durch die allseitige Umschließung des Kernbereichs neben der materialbedingten Haftung an dem Kernbereich auch eine Haftung durch allseitigen Formschluß erteilt ist.

Für die Bindung der Teilchen des teilchenförmigen, vulkanisierten Altgummimaterials aneinander kommen verschiedene Bindemittel in Frage, die sich mit vulkanisiertem Altgummimaterial verbinden. Bevorzugt verwendet man als Bindemittel eine unvulkanisierte Rohgummimischung, welche nach üblichen Methoden der Gummiverarbeitung vulkanisiert werden kann. Dieser unvulkanisierten Rohgummimischung werden übliche Verarbeitungshilfsmittel und Vulkanisationshilfsmittel, insbesondere Schwefel, zugesetzt, so daß die Vulkanisation in üblicher Weise unter Wärme und Druck durchgeführt werden kann.

Die Verbindung der Deckhaut mit dem Material des Kernbereichs erfolgt bevorzugt ebenfalls durch Vulkanisation.

Eine besonders gute Haftung der Deckhaut an dem Kernbereich erhält man dann, wenn die Deckhaut und das Bindemittel aus gleicher oder ähnlicher Rohgummimischung bestehen und durch Vulkanisation gehärtet und miteinander verbunden sind. Dabei hat man immer noch Variationsmöglichkeiten bei der Auswahl der Rohgummimischung für die Bildung der Deckhaut einerseits und für die Bindung des teilchenförmigen, vulkanisierten Altgummimaterials andererseits: Man wird die Rohgummimischung für die Deckhaut insbesondere unter dem Gesichtspunkt der Begeh- und Befahreigenschaften wählen und die Rohgummimischung für die Bindung des teilchenförmigen, vulkanisierten Altgummimaterials insbesondere unter dem Gesichtspunkt eines optimalen Zusammenhalts der Altgummiteilchen und optimaler Elastizitätseigenschaften des Formkörpers als ganzen.

Die Wandstärke der Deckhaut kann an einer verkehrsbelasteten Seitenfläche des Formkörpers eine Hautdicke von 1 mm bis 10 mm haben; vorzugsweise liegt die Hautdicke bei ca. 5 mm.

Wenn man das teilchenförmige, vulkanisierte Altgummimaterial mit vulkanisierbarem Rohgummi mischt und eine Deckhaut vorsieht, so kann relativ grobkörniges Teilchenmaterial für den Kernbereich eingesetzt werden. Die größten vorkommenden Teilchen innerhalb des anzuwendenden Teilchenspektrums können dabei eine Größe von 5 mm bis 8 mm haben, vorzugsweise sollten die größten vorkommenden Teilchen eine Größe von ca. 7 mm haben. In jedem Fall ist es erwünscht, daß neben den vorstehend spezifizierten größten Teilchen auch kleinere und kleinste Teilchen vorhanden sind, damit sich die Kavitäten innerhalb der Teilchenmasse bei möglichst geringem Einsatz von Bindemittel schließen.

Der Gewichtsanteil des Altgummimaterials in dem Kernbereich kann zwischen 70 % und 90 %, bezogen auf das Gesamtgewicht von Altgummimaterial und Bindemittel im Kernbereich, betragen und beträgt vorzugsweise ca. 35 Gew.%. Man erkennt aus diesen Angaben, daß der Formkörper zu einem sehr großen Teil aus Altgummimaterial bestehen kann, was zu einer sehr wirtschaftlichen Fertigung führt.

Grundsätzlich kann das Bindemittel auch von einem thermoplastischen Kunststoff gebildet sein, insbesondere von thermoplastischem Abfallmaterial. Thermoplastisches Abfallmaterial fällt z. B. in großer Menge bei der Folienfabrikation und Folienverarbeitung an. Dieses Folienabfallmaterial eignet sich hervorragend als Bindemittel für die Bindung des teilchenförmigen, vulkanisierten Altgummimaterials. Besondersgeeignet sind diejenigen Thermoplaste, die ihrerseits elastisch sind, wie z. B. Thermoplaste auf Polyolefinbasis.

Bei der Verwendung von thermoplastischem Kunststoff als Bindemittel setzt man als teilchenförmiges, vulkanisiertes Altgummimaterial ein solches ein, bei dem die größten vorkommenden Teilchen eine Größe von 1 mm bis 3 mm, vorzugsweise ca. 2 mm, besitzen. Dabei beträgt der Gewichtsanteil des teilchenförmigen, vulkanisierten Altgummimaterials etwa 40 % bis 60 %, vorzugsweise ca. 50 %, während der Gewichtsanteil des thermoplastischen Bindemittels etwa 60 % bis 40 %, vorzugsweise ca. 50 %, beträgt. Grundsätzlich ist es auch bei Verwendung von thermoplastischem Bindemittel möglich, eine geschlossene Deckhaut zumindest auf den befahrenen Flächen vorzusehen. Es hat sich aber gezeigt, daß auch ohne Deckhaut wegen der Anwesenheit der vulkanisierten Altgummiteilchen an der Oberfläche ausreichende Begeh- und Befahreigenschaften erzielt werden.

Wenn vorstehend von Begeh- und Befahreigenschaften die Rede war, so ist noch anzufügen, daß ein wesentlicher Gesichtspunkt im Rahmen der Begeh- und Befahreigenschaften das Rutschverhalten ist, und zwar sowohl im trockenen als auch im nassen Zustand. Dieses Rutschverhalten kann günstig dadurch beeinflußt werden, daß verkehrsbelastete Oberflächenbereiche mit einer Flächenprofilierung versehen werden, beispielsweise einem Rautenmuster. Weiterhin können die Gleiteigenschaften der verkehrsbelasteten Oberflächenbereiche auch dadurch günstig beeinflußt werden, daß diese Oberflächenbereiche mit Nägeln oder Spikes bestückt werden.

Der Formkörper kann in einem, seiner verkehrsbelasteten Oberfläche fernen Volumenbereich mit gewichtsmindernden Kavitäten ausgeführt sein, beispielsweise an seiner auf dem Gleisrost oder dem Bettungsmaterial aufliegenden Oberfläche. Diese gewichtsmindernden Kavitäten führen nicht nur zu einer weiteren Verbesserung der Wirtschaftlichkeit, sondern überdies auch zu einem verringerten Gewicht, welches die Handhabung großflächiger Platten erleichtert oder, anders ausgedrückt, die Herstellung von größeren Formkörpern ermöglicht, ohne daß die Handhabbarkeit eingeschränkt wird.

Als allgemeine Regel kann gelten, daß man Formkörper mit Deckhaut und vulkanisiertem Rohgummi als Bindemittel zwischen den Altgummiteilchen bevorzugt für die unmittelbar befahrenen Formkörper von Gleisübergängen anwendet, welche für Schwerlastverkehr bestimmt sind. Andererseits wendet man die mit thermoplastischem Bindemittel hergestellten Formkörper bevorzugt dann an, wenn es gilt, Gleisübergänge zu schaffen, die hauptsächlich von Fußgängern und kleineren Fahrzeugen befahren werden.

Diejenigen Formkörper, die zur Anpassung an Schienenbefestigungskonstruktionen und zur Zentrierung der unmittelbar befahrenen Formkörper vorgesehen sind, werden ebenfalls bevorzugt unter Verwendung von thermoplastischen Bindemitteln hergestellt.

Das erfindungsgemäße Verfahren nach Anspruch 1 ist insbesondere geeignet, wenn man teilchenförmiges Altgummimaterial mit Rohgummi als Bindemittel bindet. Die die Deckhaut bildenden Rohgummischichten werden in plastilinartiger Konsistenz in die Form eingelegt.

Um bei großer Plattendicke eine gleichmäßige Vulkanisierung sowohl in der Deckhaut als auch in dem als Bindemittel der Altgummiteilchen eingesetzten Rohgummi zu erhalten, wird empfohlen, daß man die Mischung von teilchenförmigem, vulkanisiertem Altgummimaterial und vulkanisationsfähigem Rohgummi mit einer für die Vulkanisation des Rohgummis im wesentlichen ausreichenden Temperatur einbringt, so daß man nur noch die für die Vulkanisation der deckhautbildenden Rohgummischichten notwendige Wärme durch die Formwände zuführen muß.

Will man einen allseitig von Deckhaut eingeschlossenen Formkörper gewinnen, so kann man in der Weise vorgehen, daß man eine Unterform mit einer Vulkanisationsmittel enthaltenden Rohgummischicht auslegt, in die so ausgelegte Unterform die Mischung von teilchenförmigem vulkanisiertem Altgummimaterial einfüllt, die Oberseite der Mischung durch eine weitere Schicht von Vulkanisationsmittel enthaltendem Rohgummi abdeckt und sodann eine Oberform mit Druck auf den Inhalt der Unterform einwirken läßt. Dabei kann die Verbindung der auf der Oberseite aufgelegten weiteren Schicht mit den formauskleidenden Schichten durch Überlappung verbessert werden.

Das teilchenförmige, vulkanisierte Altgummimaterial und das Bindemittel können beispielweise in einem Schneckenmischer miteinander vermischt werden. Dabei kann man je nach der angewandten Mischtemperatur erreichen, daß die Teilchen des Altgummimaterials von dem Bindemittel eingeschlossen werden. Es ist ersichtlich, daß man auf diese Weise für eine gute Verteilung des Bindemittels innerhalb der Masse von vulkanisierten Altgummimaterialteilchen sorgt.

Will man entsprechend dem Anspruch 2 einen Formkörper mit thermoplastischem Bindemittel herstellen, so kann man etwa so vorgehen, daß man eine Mischung von teilchenförmigem, vulkanisiertem Altgummimaterial und thermoplastifiziertem Bindemittel in zähplastischem Zustand in eine Form bringt. Die Form wird dabei schon vor dem Einbringen der Mischung auf eine erhöhte Temperatur knapp unterhalb des Erweichungspunkts des thermoplastifizierten Bindemittels eingestellt. Damit ist sichergestellt, daß beim Einbringen der Mischung keine Schockabkühlung des thermoplastischen Bindemittels stattfindet, die zu verschlechterten physikalischen Eigenschaften des Formkörpers führen könnte. In der Form wird die Mischung dann unter Druck verteilt und durch die Berührung mit den Formwänden abgekühlt. Nach Abkühlung bis unterhalb des Erweichungspunkts des thermoplastifizierten Bindemittels kann der Formkörper aus der Form entnommen und sodann außerhalb der Form weiter abgekühlt werden.

Die Bereitstellung der Mischung von teilchenförmigem, vulkanisiertem Altgummimaterial und thermoplastischem Bindemittel kann etwa in der Weise geschehen, daß man thermoplastisches Folienmaterial in einer Häkselmaschine unter Erwärmung durch die zugeführte mechanische Häkselenergie zerkleinert, dem zerkleinerten Häkselgut das teilchenförmige, vulkanisierte Altgummimaterial zumischt und die erhaltene Mischung in einem Schneckenmischer mischt.

In jedem Fall empfiehlt es sich, die Mischung aus Altgummimaterial und Bindemittel aus der Produktionsstufe der Mischung jeweils in einen Zwischenbehälter zu geben, der auf eine optimale Temperatur eingestellt ist, und die Einfüllung der Mischung jeweils erst dann vorzunehmen, wenn in dem Zwischenbehälter genügend Mischung enthalten ist, um die jeweilige Form aufeinmal zu füllen. Die Homogenitätseigenschaften des Formkörpers werden auf diese Weise verbessert.

Die beiliegenden Figuren erläutern die Erfindung anhand eines Ausführungsbeispiels. Es stellen dar:
- Fig. 1: eine erfindungsgemäße Gleisübergangseinrichtung nach einer ersten Ausführungsform;
- Fig. 2: eine Draufsicht zu Fig. 1;
- Fig. 3: einen Schnitt nach Linie III - III der Fig. 2 beim Einbringen der Mittelplatten zwischen zwei Schienen;
- Fig. 4: einen Schnitt entsprechend demjenigen nach Fig. 3 nach Fertigstellung anschließender Straßendeckenabschnitte;
- Fig. 5: eine Ansicht einer Stoßstelle zwischen in Schienenlängsrichtung aufeinanderfolgenden Platten:
- Fig. 6: einen Schnitt durch eine Platte mit Deckhaut;
- Fig. 7: die Zusammenfügung von in Schienenlängsrichtung aufeinanderfolgender Mittelplatten;
- Fig. 8: einen Schnitt durch eine zweite Ausführungsform einer Gleisübergangseinrichtung;
- Fig. 9: einen Schnitt nach Linie IX - IX der Fig. 8;
- Fig. 10: das Schema einer Anlage zur Herstellung von Formkörpern mit Deckhaut;
- Fig. 11: den Schnitt durch eine Vulkanisierform zur Herstellung von Formkörpern mit Deckhaut und
- Fig. 12: eine Anlage zur Herstellung von Formkörpern mit thermoplastischem Bindemittel und ohne Deckhaut.

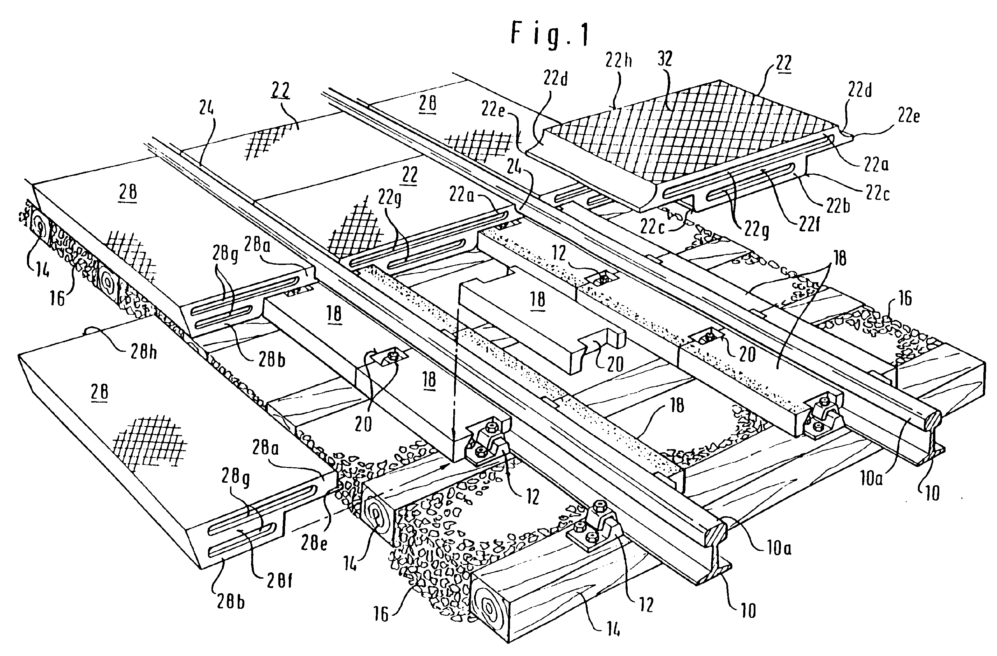

In Fig. 1 sind die beiden Eisenbahnschienen einer Gleisanlage mit 10 bezeichnet. Diese Eisenbahnschienen 10 sind durch Klemmvorrichtungen 12 auf Schwellen 14 verlegt. Die Schwellen 14 sind in einem Schotterbett 16 verlegt, das jeweils zwischen zwei aufeinanderfolgenden Schwellen durch Stopfen verdichtet ist. Die Schienen 10 und die Schwellen 14 bilden einen Gleisrost. Das Bettungsmaterial 16 liegt annähernd bündig mit den oberen Flächen der Schwellen 14.

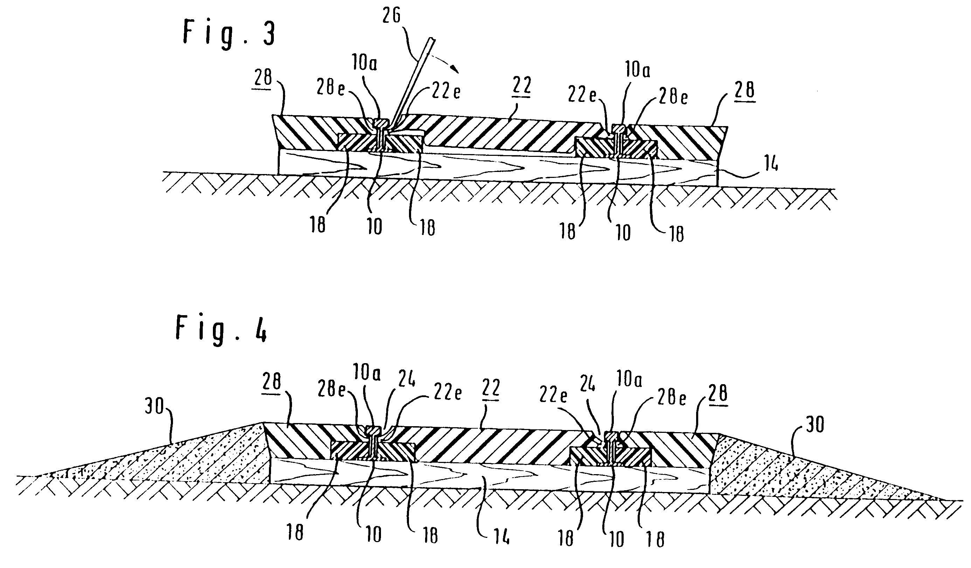

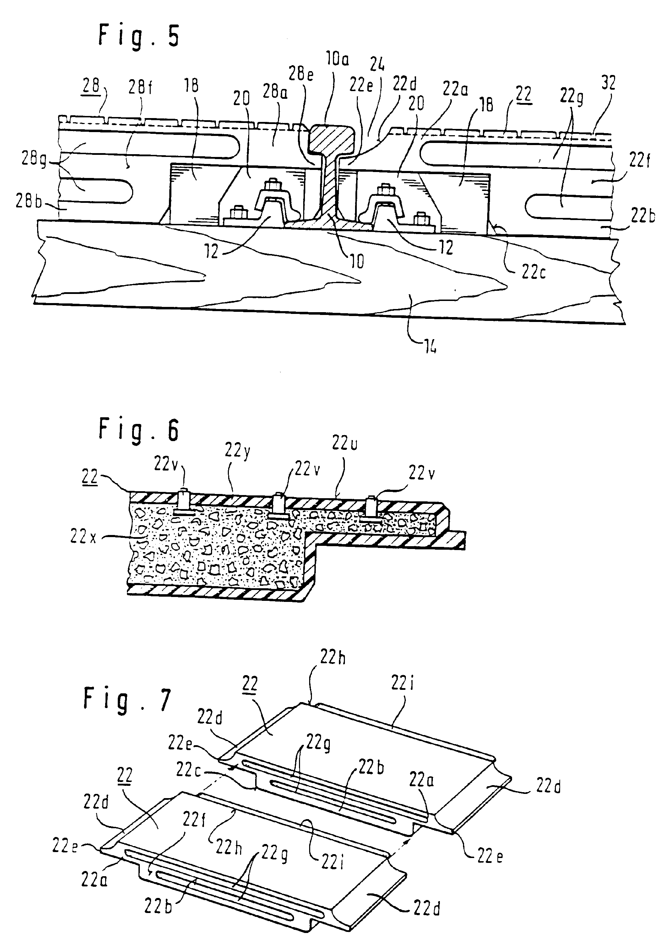

Beidseitig jeder Schiene 10 sind sog. Schienenformstücke 13 auf den Schwellen verlegt. Diese Schienenformstücke weisen an beiden Enden jeweils eine Halbausnehmung 20 auf. Die Halbausnehmungen 20 sind so bemessen, daß zwischen den beiden Halbausnehmungen zweier aufeinanderfolgender Schienenformstücke 18 jeweils eine Klemmvorrichtung 12 Platz findet. Zwischen den beiden Schienen 10 liegen auf den Schienenformstücken 18 Mittelplatten 22 auf. Diese Mittelplatten haben im wesentlichen T-förmigen Querschnitt mir einem Querschenkel 22a und einem Mittelschenkel 22b. Die Mittelschenkel 22b finden Platz zwischen den Schienenformstücken 18 und sind bei 22c so abgeschrägt, daß sie leicht zwischen die einander gegenüberliegenden Schienenformstücke 18 eingeschoben werden können. Der Querschenkel 22a ist an seinen Längskanten bei 22d so abgeschrägt oder abgekehlt, daß Vorsprünge 22e gebildet sind, welche auf den Schienenformstücken 18 aufliegend unter die Schienenköpfte 10a eingreifen. Dabei werden zumindest an den Innenseiten der Schienen Freiräume 24 für die Spurkränze der Schienenlaufräder (nicht eingezeichnet) gebildet. Die Mittelplatten 22 sind an jeweils einer Endfläche 22f mit Nuten 22g versehen und an der gegenüberliegenden Endfläche 22h mit komplementären Rippen, wie dies im einzelnen in Fig. 7 dargestellt ist. Die Rippen sind mit 22i bezeichnet. Die Mittelschenkel 22 b liegen auf dem Bettungsmaterial auf.
Das Einlegen der Mittelplatten 22 erfolgt in der Weise, daß zunächst die Vorsprünge 22e der jeweils einen Längsseite unter die zugehörigen Schienenköpfe 10a eingeschoben werden, und daß hierauf mittels eines Montiereisens 26 die Vorsprünge 22e der anderen Längsseite unter die zugehörigen Schienenköpfe 10a eingezwängt werden, wie in Fig. 3 dargestellt. Ist dieses Einzwängen beendet, so nehmen die Mittelplatten 22 die in Fig. 4 gezeigte Stellung ein. Dann können in Schienenlängsrichtung aufeinanderfolgende Mittelplatten 22 zusammengeschoben werden, so daß die Rippen 22i einer Mittelplatte 22 jeweils in die Nuten 22g der nächstfolgenden Mittelplatte eindringen und eine praktisch stoßfreie und dichte Verbindung zwischen aufeinanderfolgenden Mittelplatten besteht. Die Mittelplatten liegen dann zwischen den beiden Schienen im wesentlichen ohne Zwang, sind aber durch die Schienenköpfe 10a gegen Abheben von dem Gleisrost gesichert. Die Unterseiten der Mittelschenkel 22b liegen auf den Schwellen 14 und dem Bettungsmaterial 16 auf. Das Zusammenschieben aufeinanderfolgender Mittelplatten 22 kann mit Hilfe von Bandeisen erfolgen, die an der Unterseite der Mittelplatten 22 auf den Schwellen 14 verlegt werden. An diesen Bandeisen werden einendig jeweils ein Widerlager und anderendig jeweils ein Kraftgerät angesetzt, so daß durch Betätigung des Kraftgeräts die Mittelplatten in Längsrichtung der Schienen 10 gegeneinander gedrückt werden.

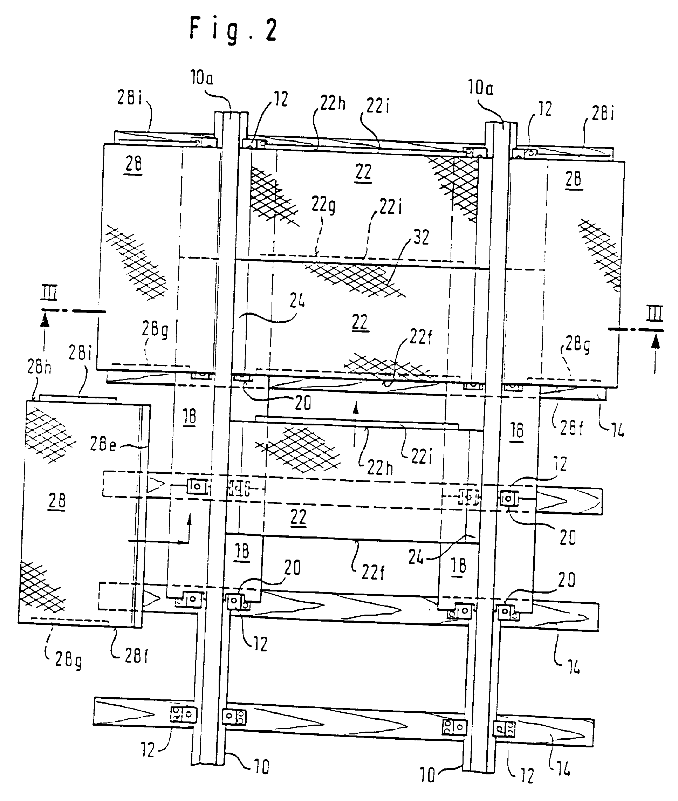

Weiterhin sind Außenplatten 28 vorgesehen, welche ebenfalls Vorsprünge 28e zum Untergreifen der Schienenköpfe 10a aufweisen und im wesentlichen L-förmige Gestalt haben mit einem horizontalen Schenkel 28a, der zur Auflage auf den Schienenformstücken 18 bestimmt ist und einem vertikalen Schenkel 28b, der zur Auflage auf den Schwellen 14 und dem Bettungsmaterial 16 bestimmt ist. Die Außenplatten 28 sind wiederum mit Nuten 28g an jeweils einer Endfläche 28f und mit entsprechenden Rippen 28i an der jeweils gegenüberliegenden Endfläche 28h ausgeführt (siehe Fig. 2), so daß sie genauso zusammengeschoben werden können wie die Mittelplatten.

Zur Erleichterung des Zusammenbaus werden die Oberseiten der Schienenformstücke 18 vor dem Auflegen der Mittelplatten 22 und der Außenplatten 28 mit Schmierseife gleitfreudig gemacht.

Die Außenplatten 28 werden, wie aus Fig. 4 ersichtlich, durch anschließende Fahrbahnkörper 30 in ihrer Lage gehalten.

In Fig. 5 erkennt man eine Stoßstelle zwischen aufeinanderfolgenden Mittelplatten 22 und Außenplatten 28.

Fig. 1 und 5 lassen erkennen, daß die befahrenen oberen Flächen der Mittelplatten und Außenplatten mit einer rautenförmigen Profilierung 32 versehen sind.

In Fig. 6 erkennt man einen Querschnitt durch eine Mittelplatte 22, der etwa nach Linie III - III der Fig. 2 gewonnen ist. Diese Mittelplatte besteht aus einem Kernbereich 22x und einer Deckhaut 22y. Der Kernbereich 22x ist dabei aus einem teilchenförmigen Altgummimaterial hergestellt, wobei die Teilchen durch vulkanisiertes Rohgummimaterial aneinander gebunden sind. Die Deckhaut 22y besteht ebenfalls aus vulkanisiertem Rohgummimaterial. Die Deckhaut 22y ist mit dem Kernbereich 22x zusammen vulkanisiert. Nahe der verkehrsbelasteten Fläche 22u sind Spikes oder Nägel 22v vorgesehen, welche über die verkehrsbelastete Fläche 22u vorstehen können oder jedenfalls so nahe der Fläche 22u enden, daß sie bei Druckbelastung der verkehrsbelasteten Fläche 22u wirksam werden. Je nach Dicke der Deckhaut 22y können die Spikes oder Nägel 22v auch ausschließlich in der Deckhaut verankert sein. In Fig. 6 ist vorgesehen, daß die Spikes bzw. Nägel auch in dem Kernbereich 22x verankert sind.

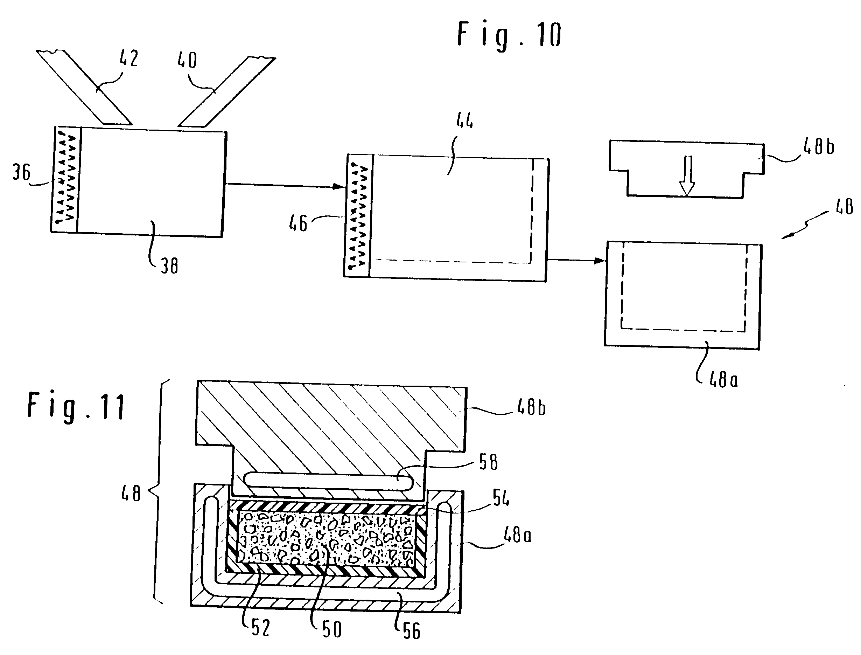

Die Herstellung einer Mittelplatte, wie sie in Fig. 6 dargestellt ist, kann etwa so erfolgen, wie nachstehend anhand von Fig. 10 und 11 beschrieben.

In einen mit einer Beheizungsvorrichtung 36 ausgerüsteten Mischer 38, etwa einen Schneckenmischer, wird durch eine Beschickungsvorrichtung 40 teilchenförmiges Altgummimaterial eingegeben, das durch Zerkleinern von Reifen- deckenabfällen gewonnen worden ist und ein Teilchengrößenspektrum besitzt, dessen größte Teilchen eine maximale lineare Ausdehnung von ca. 7 mm besitzen. Gleichzeitig wird in den Mischer 38 durch eine weitere Beschickungsvorrichtung 42 vulkanisierbares Rohgummimaterial zugeführt, beispielsweise in Granülenform. Dem Rohgummimaterial sind bereits Vulkanisationsmittel, wie Schwefel, und Verarbeitungshilfsmittel zugesetzt. Alternativ können die Vulkanisationshilfsmittel und die Verarbeitungshilfsmittel auch gesondert dem Mischer zugeführt werden. Die in dem Mischer erhaltene Mischung hat eine Temperatur, die bereits ausreichend ist, um später bei entsprechender Druckeinwirkung eine Vulkanisation zu bewirken. Diese heiße Mischung wird laufend einem Isolierbehälter 44 zugeführt, der mit einer Beheizungsvorrichtung 46 ausgestattet sein kann. In dem Isolierbehälter bleibt die Temperatur der Mischung erhalten oder wird ggf. noch erhöht. Sobald in dem Isolierbehälter eine der jeweils zu bildenden Mittelplatten ausreichende Mischgutmenge enthalten ist, wird der Inhalt des Isolierbehälters in eine Form 48 übertragen, z. B. durch Kippen des Isolierbehälters 44.

In Fig. 11 ist die Form 48 im einzelnen dargestellt; sie besteht aus einer Unterform 48a und einer Oberform 48b. Vor dem Einbringen der Mischung 50 wird die Unterform 48a mit einer Schicht 52 von vulkanisierbarem Rohgummi ausgekleidet. Dieser vulkanisierbare Rohgummi enthält bereits die notwendigen Vulkanisationsmittel und Verarbeitungshilfsmittel; beispielsweise hat das Schichtmaterial eine plastilinartige Konsistenz, so daß es sich leicht an die Innenwände der Unterform 48a anlegen läßt. In die durch das Schichtmaterial 52 gebildete Mulde wird sodann die Mischung 50 aus dem Isolierbehälter 44 eingefüllt. Hierauf wird eine weitere Schicht 54 von vulkanisierbarem Rohgummi über die Mischung 50 gebreitet. Die Schicht 54 wird dicht an die Schicht 52 angeschlossen, ggf. mit Überlappung etwa in der Weise, daß die oberen Ränder der Schicht 52 über die Schicht 54 geklappt werden. Anschließend wird die Oberform 48b gegen die Unterform 48a gepreßt. Die Unterform 48a ist mit einer Heizvorrichtung 56 ausgerüstet. Eine weitere Heizvorrichtung 58 ist in der Oberform 48b vorgesehen. In der Form 48 wird nunmehr sowohl der Rohgummianteil der Mischung 50 als auch der Rohgummi der Schichten 52 und 54 vulkanisiert. Dabei steht für die Vulkanisation der Mischung 50 die Wärme zur Verfügung, die mit der Mischung in die Unterform 48a eingebracht worden ist, während die Vulkanisationswärme für die Schichten 52 und 54 von den Heizvorrichtungen 56 und 58 her durch die Formraum-Begrenzungswände übertragen wird. Durch die Vulkanisation der Mischung 50 entsteht eine Matrix von Vulkanisationsrohgummi, in welcher die Teilchen des bereits früher vulkanisierten Altgummimaterials einzeln oder gruppenweise eingeschlossen sind. Die Schichten 52 und 54 werden ebenfalls vulkanisiert und gehen als Folge der Vulkanisation eine festhaftende Stoffverbindung mit der Mischung ein. Auf diese Weise entsteht aus der Mischung 50 der Kernbereich 22x gemäß Fig. 6 und aus den Rohgummischichten 52 und 54 die Deckhaut 22y der Fig. 6. Die Spikes oder Nägel 22v können bereits in den Schichten 52 und 54 gesetzt werden, so daß sie beim Vulkanisationsvorgang miteinvulkanisiert werden. Es ist aber auch möglich, die Spikes oder Nägel nachträglich in den Formkörper gemäß Fig. 6 einzuschießen.

Nach Beendigung des Vulkanisationsvorgangs kann der Formkörper aus der Form 48 entnommen und abgekühlt werden. Er ist dann gebrauchsfertig.

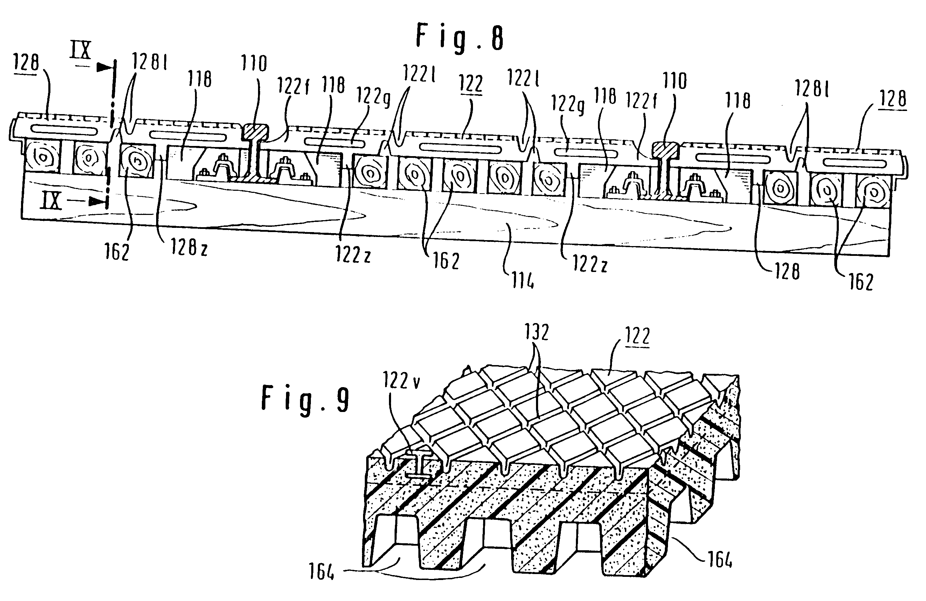

In den Fig. 8 und 9 ist eine weitere Ausfürungsform einer Gleisübergangseinrichtung dargestellt. In dieser Ausführungsform sind die Mittelplatten 122 mit geringerer Plattenstärke ausgeführt als in der Ausführungsform nach den Fig. 1 - 7. Die Mittelplatten 122 liegen auf Längshölzern 162 auf, die ihrerseits auf Schwellen 114 verlegt sind. Ebenso liegen die Außenplatten 128 auf Längshölzern 162 auf. Die verkehrsbelasteten Oberflächen der Mittelplatten 122 sind mit einem Rautenmuster 132 versehen und mit Nägeln oder Spikes 122v bestückt. Die Endflächen 122f sind auch hier mit Nuten 122g versehen, denen Rippen an den jeweils gegenüberliegenden nicht eingezeichneten Endflächen entsprechen. Der Eingriff der Mittelplatten 122 und der Außenplatten 128 in die Schienen 110 ist genauso wie in der Fig. 1. Im Bereich der Schienen liegen auch hier Schienenformstücke 118, die ähnlich oder identisch gestaltet sind wie in Fig. 1. Die Mittelplatten 122 und die Außenplatten 128 sind mit Zentrierleisten 122z bzw. 128z ausgeführt, welche an den Schienenformstücken 118 anliegen. Die Mittelplatten 122 und die Außenplatten 128 sind mit Längsnuten 122l bzw. 128l ausgeführt, welche bei Wärmeausdehnung eine Entlastung bewirken und außerdem den Einbau der Mittelplatten 122 nach der Methode der Fig. 3 erleichtern. An der Unterseite der Platten 122 und ebenso der Außenplatten 128 können Ausnehmungen 164 vorgesehen sein, welche zu einer Gewichtsminderung führen.

Die Ausführungsform nach Fig. 8 und 9 ist in den Herstellungskosten günstiger als die Ausführungsform nach den Fig. 1 - 7, weil die Platten 122 und 128 weniger Material erfordern. Der Materialaufwand für die Längshölzer 162 ist dabei geringer als der Materialaufwand für die dickeren Platten. Die Ausführungsform nach Fig. 8 und 9 ist insbesondere für Gleisübergangseinrichtungen bestimmt, die nur von Fußgängern und leichten Fahrzeugen benutzt werden.

Die Ausnehmungen 164 gemäß Fig. 9 können auch in den Platten gemäß Fig. 1 - 7 angewandt werden.

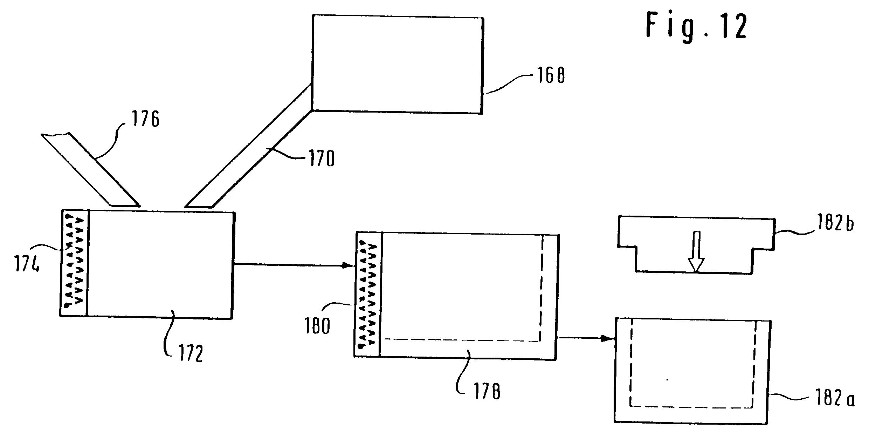

Die Platten 122 und 128 gemäß Fig. 8 und 9 bestehen aus einem teilchenförmigen Altgummimaterial mit einem Größenspektrum, dessen größte Teilchen in der Größenordnung von 1 - 2 mm linearer Ausdehnung liegen. Diese Teilchen sind in einer thermoplastischen Bindemasse gebunden. Eine Deckhaut ist hier nicht erforderlich. Die Kleinheit der Teilchen sorgt hier dafür, daß im wesentlichen geschlossene Oberflächen erzielt werden, wobei etwa durch die Oberfläche tretende Altgummiteilchen die Oberflächenstruktur im Sinne einer verringerten Rutschfestigkeit verbessern. Die Herstellung der Mittelplatten 122 und 128 erfolgt so, wie in Fig. 12 schematisch dargestellt.

In Fig.12 ist mit 168 eine Häkselvorrichtung bezeichnet, in welcher thermoplastische Abfallfolien zu Häkselgut unter Erwärmung verarbeitet werden. Die gehäkselten Folienteilchen haben eine größte lineare Ausdehnung von ca. 15 mm. Das Häkselgut wird durch die mechanische Energie des Häkselvorgangs erwärmt. Das erwärmte Häkselgut gelangt durch einen Zulauf 170 in einen Schneckenmischer 172, der ebenfalls mit einer Beheizungsvorrichtung 174 ausgerüstet sein kann. Durch einen weiteren Zulauf 176 gelangt teilchenförmiges, vulkanisiertes Altgummimaterial in den Schneckenmischer 172. Das Teilchengrößenspektrum des vulkanisierten Altgummimaterials ist so, daß die größten vorkommenden Teilchen eine lineare Größe von ca. 1 - 2 mm haben. Das Mischungsverhältnis von thermoplastischer Abfallfolie und vulkanisierten Altgummiteilchen ist ca. 50 : 50 Gewichtsanteile. Das thermoplastische Altfolienmaterial besteht beispielsweise aus Polyethylen. In dem Schneckenmischer 172 wird eine Temperatur erreicht, die über dem Thermoplastifizierungspunkt des jeweiligen thermoplastischen Materials liegt. Von dem Schneckenmischer 172 gelangt das Mischgut in einen Isolierbehälter 178, der seinerseits mit einer Beheizungsvorrichtung 180 ausgerüstet sein kann. Wenn in dem Isolierbehälter 178 ausreichend Mischgut enthalten ist, um eine Form zur Herstellung beispielsweise einer Mittelplatte 122 zu füllen, so wird das Mischgut in eine Unterform 182a geschüttet und dann durch eine Oberform 182b verpreßt. Die Form 182 besitzt beim Einfüllen des Mischguts eine Temperatur, die knapp unterhalb des Erweichungspunkts des thermoplastischen Folienmaterials liegt. In der Form wir durch das Verpressen des zunächst noch über den thermoplastischen Erweichungspunkt erhitzten Mischguts eine Matrix von thermoplastischem Material gebiltet, in welcher die Teilchen des vulkanisierten Altgummimaterials einzeln oder gruppenweise eingeschlossen sind. Die Temperatur der Form 182a, 182b knapp unterhalb des Erweichungspunkts verhindert eine Schockabkühlung. In der Form 182a, 182b tritt sodann eine langsame Abkühlung ein. Sobald die Abkühlung des Mischguts soweit fortgeschritten ist, daß ein stabiler Formkörper entstanden ist, wird dieser aus der Form entnommen und weiter abgekühlt. Der abgekühlte Formkörper ist zum Einsatz in einer Gleisübergangseinrichtung fertig.

Die Nägel oder Spikes können hier in den fertigen Formkörper eingeschlossen werden. Es ist aber auch möglich, die Nägel oder Spikes an der die befahrbare oder begehbare Oberfläche bildenden Formwand vorzupositionieren und dann bei der Ausformung des Formkörpers in diesen einzubetten.

Das Verfahren gemäß Fig. 12 ist insbesondere zur Herstellung der Schienenformstücke 18 gemäß Fig. 1 und ferner zur Herstellung der Schienenformstücke 118 sowie der Mittel- und Außenplatten 122 und 128 der Fig. 8 geeignet. Grundsätzlich ist es aber auch möglich, nach dem Verfahren gemäß Fig. 12 die Mittelplatten 22 und die Außenplatten 28 gemäß Fig.1 herzustellen; die Mittelplatten 22 und die Außenplatten 28 gemäß Fig. 1 werden bevorzugt nach dem Verfahren gemäß Fig. 10 und 11 hergestellt. Um gekehrt ist es aber auch möglich, die Mittelplatten 22 und die Außenplatten 28 gemäß Fig. 1 nach dem Verfahren gemäß Fig. 12 herzustellen.

## Patentansprüche

1. Verfahren zur Herstellung einer Gleisübergangseinrichtung durch Ausformen von Formkörpern (22,28) mit Gummigehalt und anschließendes Verlegen der Formkörper (22,28) über einem Gleisrost (10,14) und/oder einem Bettungsmaterial (16) einer Gleisanlage,
dadurch gekennzeichnet,
daß die Formkörper (22,28) in ihrem Kernbereich (22x) unter Verwendung von teilchenförmigem, vulkanisiertem Altgummimaterial und an mindestens einer verkehrsbelasteten Seitenfläche mit einer im wesentlichen geschlossenen Deckhaut (22y) in der Weise hergestellt werden,
daß man eine Form (48) wenigstens teilweise mit einer Vulkanisationsmittel enthaltenden Rohgummischicht (52) auslegt, daß man das Restvolumen der Form (48) sodann mit einer Mischung von teilchenförmigem, vulkanisiertem Altgummimaterial und einem Bindemittel füllt und daß man sodann unter Wärme und Druck die Rohgummischicht unter Herstellung einer Verbindung mit der Mischung vulkanisiert und das Bindemittel erhärten läßt.

2. Verfahren zur Herstellung einer Gleisübergangseinrichtung durch Ausformen von Formkörpern (122,128) mit Gummigehalt und anschließendes Verlegen der Formkörper (122,128) über einem Gleisrost (110,114) und/oder einem Bettungsmaterial einer Gleisanlage,
dadurch gekennzeichnet,
daß die Formkörper (122,128) unter Verwendung von teilchenförmigem, vulkanisiertem Altgummimaterial hergestellt werden in der Weise,
daß man eine Mischung von teilchenförmigem, vulkanisiertem Altgummimaterial und thermoplastifiziertem Bindemittel in zähplastischem Zustand in eine Form (182a,182b) bringt, welche auf eine erhöhte, aber knapp unterhalb des Erweichungspunkts des thermoplastifizierten Bindemittels liegende Temperatur eingestellt ist, daß man diese Mischung unter Druck innerhalb der Form (182a) verteilt und daß man den so entstandenen Formkörper nach Abkühlung auf eine Temperatur unterhalb des Erweichungspunkts des thermoplastifizierten Bindemittels aus der Form (182a,182b) entnimmt und sodann weiter abkühlt.

3. Verfahren nach Anspruch 1 oder 2,
dadurch gekennzeichnet,
daß das teilchenförmige, vulkanisierte Altgummimaterial durch das erhärtete Bindemittel zu einer im wesentlichen volumeninkompressiblen elastischen Masse (22x) gebunden wird.

4. Verfahren nach einem der Ansprüche 1 - 3,
dadurch gekennzeichnet,
daß von dem Bindemittel eine einzelne Teilchen oder Teilchengruppen des Altgummimaterials im wesentlichen vollständig einschließende Matrix gebildet wird.

5. Verfahren nach einem der Ansprüche 3 und 4,
dadurch gekennzeichnet,
daß das teilchenförmige, vulkanisierte Altgummimaterial des Kernbereichs (22x) durch eine vulkanisierbare Rohgummimischung unter Wärme und Druck gebunden wird.

6. Verfahren nach einem der Ansprüche 1 und 3 - 5,
dadurch gekennzeichnet,
daß der Kernbereich (22x) von der Deckhaut (22y) im wesentlichen vollständig eingeschlossen wird.

7. Verfahren nach einem der Ansprüche 1 und 3 - 6,
dadurch gekennzeichnet,
daß die Deckhaut (22y) durch Vulkanisiation mit dem Bindemittel des Kernbereichs (22x) verbunden wird.

8. Verfahren nach einem der Ansprüche 1 und 3 - 7,
dadurch gekennzeichnet,
daß das Bindemittel des Kernbereichs (22x) und die Deckhaut (22y) aus gleicher oder ähnlicher Rohgummimischung durch Vulkanisation gehärtet und miteinander verbunden werden.

9. Verfahren nach einem der Ansprüche 1 und 3 - 8,
dadurch gekennzeichnet,
daß die Deckhaut (22y) an einer verkehrsbelasteten Seitenfläche mit einer Hautdicke von 1 mm - 10 mm, vorzugsweise ca. 5 mm, hergestellt wird.

10. Verfahren nach einem der Ansprüche 5 - 9,
dadurch gekennzeichnet,
daß die Teilchen des teilchenförmigen, vulkanisierten Altgummimaterials ein Teilchengrößenspektrum besitzen, in dem die größten vorkommenden Teilchen eine Größe von 5 mm - 8 mm, vorzugsweise ca. 7 mm, besitzen.

11. Verfahren nach einem der Ansprüche 1 - 10,
dadurch gekennzeichnet,
daß das teilchenförmige Altgummimaterial durch Zerkleinerung von Altgummiformkörpern, wie Reifenbelägen, gebildet wird.

12. Verfahren nach einem der Ansprüche 5 - 11,
dadurch gekennzeichnet,
daß der Gewichtsanteil des Altgummimaterials in dem Kernbereich (22x) 70 % - 90 %, vorzugsweise ca. 85 %, beträgt.

13. Verfahren nach einem der Ansprüche 1 - 4, 6, 7, 9 und 11,
dadurch gekennzeichnet,
daß das Bindemittel von einem thermoplastischen Kunststoff gebildet wird.

14. Verfahren nach einem der Ansprüche 1 - 4, 6, 7, 9, 11 und 13,
dadurch gekennzeichnet,
daß das Bindemittel von thermoplastischem Abfallmaterial gebildet wird.

15. Verfahren nach einem der Ansprüche 1 - 4, 6, 7, 9, 11, 13 und 14,
dadurch gekennzeichnet,
daß das Bindemittel von einem thermoplastischen Material auf Polyolefinbasis, insbesondere Polyethylen- oder Polypropylenbasis, gebildet wird.

16. Verfahren nach einem der Ansprüche 2 - 4, 6, 7, 9, 11 und 13 - 15,
dadurch gekennzeichnet,
daß das teilchenförmige, vulkanisierte Altgummimaterial ein Größenspektrum besitzt, in dem die größten vorkommenden Teilchen eine Größe von 1 mm - 3 mm, vorzugsweise ca. 2 mm, besitzen.

17. Verfahren nach einem der Ansprüche 2 - 4, 6, 7, 9, 11 und 13 - 16,
dadurch gekennzeichnet,
daß der Gewichtsanteil des teilchenförmigen, vulkanisierten Altgummimaterials 40 % - 60 %, vorzugsweise ca. 50 %, beträgt und daß der Gewichtsanteil des thermoplastischen Bindemittels 60 % - 40 %, vorzugsweise ca. 50 %, beträgt.

18. Verfahren nach einem der Ansprüche 1 - 17,
dadurch gekennzeichnet,
daß mindestens ein verkehrsbelasteter Oberflächenbereich des Formkörpers mit einer Flächenprofilierung (32) versehen wird.

19. Verfahren nach Anspruch 18,
dadurch gekennzeichnet,
daß als Flächenprofilierung (32) ein Rautenmuster vorgesehen wird.

20. Verfahren nach einem der Ansprüche 1 - 19,
dadurch gekennzeichnet,
daß ein verkehrsbelasteter Oberflächenbereich des Formkörpers mit Nägeln oder Spikes (22v) bestückt wird.

21. Verfahren nach einem der Ansprüche 1 - 20,
dadurch gekennzeichnet,
daß der Formkörper in einem seiner verkehrsbelasteten Oberfläche fernen Volumenbereich mit gewichtsmindernden Kavitäten (164) ausgeführt wird.

22. Verfahren nach einem der Ansprüche 1, 3 - 12 und 18 - 21,
dadurch gekennzeichnet,
daß man die Mischung von teilchenförmigem, vulkanisiertem Altgummimaterial und Bindemittel mit einer für die Aushärtung des Bindemittels im wesentlichen ausreichenden Temperatur in die Form (48) einbringt und daß man die für die Vulkanisation der Rohgummischicht (52) notwendige Wärme im wesentlichen durch die Formwände (48a,48b) zuführt.

23. Verfahren nach einem der Ansprüche 1 und 3 - 22,
dadurch gekennzeichnet,
daß man eine Unterform (48a) mit einer Vulkanisationsmittel enthaltenden Rohgummischicht (52) auslegt, in die so ausgelegte Unterform (48a) die Mischung von teilchenförmigem, vulkanisiertem Altgummimaterial und Bindemittel einfüllt, die Oberseite der in der Form enthaltenen Mischung durch eine weitere Schicht (54) von Vulkanisationsmittel enthaltendem Rohgummi abdeckt, die Schichten (52,54) ggf. durch Überlappung schließt und anschließend eine Oberform (48b) mit Druck auf den Inhalt der Unterform (48a) einwirken läßt.

24. Verfahren nach einem der Ansprüche 1 und 3 - 23,
dadurch gekennzeichnet,
daß man das teilchenförmige, vulkanisierte Altgummimaterial und das Bindemittel in einem Schneckenmischer (38) mischt.

25. Verfahren nach einem der Ansprüche 2 - 4, 11 und 13 - 21,
dadurch gekennzeichnet,
daß man thermoplastisches Folienmaterial in einer Häkselvorrichtung (168) unter Erwärmung durch die zugeführte mechanische Häkselenergie zerkleinert, dem zerkleinerten Häkselgut das teilchenförmige, vulkanisierte Altgummimaterial zumischt, die erhaltene Mischung in einem Schneckenmischer (178) mischt und die plastifizierte Mischung in die Form (182a,182b) gibt.

## Claims

1. Process for producing a railroad crossing means by molding molded members (22,28) containing rubber and then laying the molded members (22,28) over a track grating (10,14) and/or ballast (16) of a track system,
characterized in
that the molded members (22,28) are produced with the use of granular vulcanized scrap rubber in their core region (22x) and with an essentially closed covering skin (22y) on at least one traffic-loaded face in such a way that a mold (48) is at least partially lined with a crude rubber layer (52) containing vulcanizing agent, that the remaining volume of the mold (48) is then filled with a mixture of granular vulcanized scrap rubber and a binder, and that the crude rubber layer is then vulcanized under heat and pressure, producing a bond with the mixture, and the binder allowed to harden.

2. Process for producing a railroad cross means by molding molded members (122,128) containing rubber and then laying the molded members (122,128) over a track grating (110,114) and/or ballast of a track system,
characterized in
that the molded members (122,128) are produced with the use of granular vulcanized scrap rubber in such a way that a mixture of granular vulcanized scrap rubber and thermoplasticized binder in a semiplastic state is introduced into a mold (182a,182b) which is set to a high temperature just below the softening point of the thermoplasticized binder, that this mixture is distributed under pressure within the mold (182a), and that the molded member so produced is removed from the mold (182a,182b) after cooling to a temperature below the softening point of the thermoplasticized binder and then cooled further.

3. Process according to claim 1 or 2, characterized in
that the granular vulcanized scrap rubber is bound by the hardened binder into an elastic compound (22x) essentially incompressible in volume.

4. Process according to any of claims 1 - 3, characterized in
that a single granule or groups of granules of scrap rubber are formed in the essentially completely enclosing matrix by the binder.

5. Process according to either of claims 3 and 4, characterized in
that the granular vulcanized scrap rubber of the core region (22x) is bound by a vulcanizable crude rubber mixture under heat and pressure.

6. Process according to any of claims 1 and 3 - 5, characterized in
that the core region (22x) is essentially completely enclosed by the covering skin (22y).

7. Process according to any of claims 1 and 3 - 6, characterized in
that the covering skin (22y) is bonded with the binder of the core region (22x) by vulcanization.

8. Process according to any of claims 1 and 3 - 7, characterized in
that the binder of the core region (22x) and the covering skin (22y) of the same or a similar crude rubber mixture are hardened and bonded together by vulcanization.

9. Process according to any of claims 1 and 3 - 8, characterized in
that the covering skin (22y) on a traffic-loaded face is produced with a thickness of 1 mm - 10 mm, preferably about 5 mm.

10. Process according to any of claims 5 - 9, characterized in
that the granules of the granular vulcanized scrap rubber have a particle size distribution wherein the largest granules occurring have a dimension of 5 mm - 8 mm, preferably about 7 mm.

11. Process according to any of claims 1 - 10, characterized in
that the granular scrap rubber is formed by comminution of molded members of scrap rubber, such as tire treads.

12. Process according to any of claims 5 - 11, characterized in
that the percent by weight of scrap rubber in the core region (22x) amounts to 70% - 90%, preferably to about 85%.

13. Process according to any of claims 1 - 4, 6, 7, 9 and 11, characterized in
that the binder is made of a thermoplastic synthetic material.

14. Process according to any of claims 1 - 4, 6, 7, 9, 11 and 13, characterized in
that the binder is made of thermoplastic scrap material.

15. Process according to any of claims 1 - 4, 6, 7, 9, 11, 13 and 14, characterized in
that the binder is made of a polyolefin-based thermoplastic material, in particular a polyethylene-based or polypropylene-based material.

16. Process according to any of claims 2 - 4, 6, 7, 9, 11 and 13 - 15, characterized in
that the granular vulcanized scrap rubber has a particle size distribution wherein the largest granules occurring have a dimension of 1 mm - 3 mm, preferably about 2 mm.

17. Process according to any of claims 2 - 4, 6, 7, 9, 11 and 13 - 16, characterized in
that the percent by weight of granular vulcanized scrap rubber amounts to 40% - 60%, preferably to about 50%, and in that the percent by weight of the thermoplastic binder amounts to 60% - 40%, preferably to about 50%.

18. Process according to any of claims 1 - 17, characterized in
that at least one traffic-loaded surface region of the molded member is provided with surface profiling (32).

19. Process according to claim 18, characterized in
that the surface profiling (32) is provided with a diamond pattern.

20. Process according to any of claims 1 - 19, characterized in
that a traffic-loaded surface region of the molded member is equipped with nails or spikes (22v).

21. Process according to any of claims 1 - 20, characterized in
that the molded member is designed with weight-reducing cavities (164) in a volumetric region distant from its traffic-loaded surface.

22. Process according to any of claims 1, 3 - 12 and 18 - 21, characterized in
that the mixture of granular vulcanized scrap rubber and binder is introduced into the mold (48) at a temperature essentially sufficient for thorough hardening of the binder, and in that the heat necessary for vulcanization of the crude rubber layer (52) is supplied essentially through the mold walls (48a,48b).

23. Process according to any of claims 1 and 3 - 22, characterized in
that a bottom-mold half (48a) is lined with a crude rubber layer (52) containing a vulcanizing agent, the bottom-mold half (48a) so lined is filled with the mixture of granular vulcanized scrap rubber and binder, the top of the mixture contained in the mold is covered by an additional layer (54) of crude rubber containing vulcanizing agent, the layers (52,54) are optionally closed by overlapping, and then a top-mold half (48b) is allowed to act with pressure on the contents of the bottom-mold half (48a).

24. Process according to any of claims 1 and 3 - 23, characterized in
that the granular vulcanized scrap rubber and the binder are mixed in a screw mixer (38).

25. Process according to any of claims 2 - 4, 11 and 13 - 21, characterized in
that thermoplastic film material is comminuted in a cutting device (168) with heating by the mechanical cutting energy supplied, the comminuted cut stock is admixed with the granular vulcanized scrap rubber, the mixture obtained is mixed in a screw mixer (178) and the plasticized mixture is placed in the mold (182a,182b).

## Revendications

1. Procédé de fabrication d'un dispositif de passage à niveau, par déformation de corps moulés (22, 28) contenant du caoutchouc puis pose des corps moulés (22, 28) sur une grille de voie (10, 14) et/ou un matériau de ballastage (16) d'une voie ferrée, caractérisé en ce que les corps moulés (22, 28) sont fabriqués, pour leur zone de noyau (22x), en utilisant un matériau à base de vieux caoutchouc vulcanisé se présentant sous forme de petits morceaux, et pour au moins une surface latérale, subissant la sollicitation du trafic, avec une peau de couverture (22y) pratiquement fermée, la fabrication étant telle qu'on étale dans un moule (48) au moins partiellement une couche de caoutchouc brut (52) contenant un agent de vulcanisation, qu'on remplit ensuite le volume résiduel du moule (48) avec un mélange d'un matériau à base de vieux caoutchouc vulcanisé, se présentant sous forme de petits morceaux et d'un liant et qu'ensuite, sous pression et avec de la chaleur, on vulcanise la couche de caoutchouc brute, en créant une liaison avec le mélange et on fait durcir le liant.

2. Procédé de fabrication d'un dispositif de passage à niveau, par déformation de corps moulés (122, 128) contenant du caoutchouc puis pose des corps moulés (122, 128) sur une grille de voie (110, 114) et/ou un matériau de ballastage d'une voie ferrée, caractérisé en ce que en ce que les corps moulés (122, 128) sont fabriqués en utilisant un matériau à base de vieux caoutchouc vulcanisé, se présentant sous forme de petits morceaux, de manière qu'on place un mélange d'un matériau à base de vieux caoutchouc vulcanisé, se présentant sous forme de petits morceaux et d'un liant thermoplastique à l'état viscoplastique dans un moule (182a, 182b), qui est à une température élevée, mais réglée juste au-dessous du point de ramollissement du liant thermoplastique, qu'on répartit ce mélange sous pression à l'intérieur du moule (82a) et qu'on enlève du moule (182a, 182b) le corps moulé ainsi produit, après refroidissement à une température inférieure au point de ramollissement du liant thermoplastique et qu'on continue ensuite à refroidir.

3. Procédé selon la revendication 1 ou 2, caractérisé en ce que le matériau à base de vieux caoutchouc vulcanisé, se présentant sous forme de petits morceaux est lié par le liant durci, en une masse élastique (22x) pratiquement incompressible en volume.

4. Procédé selon l'une des revendications 1 à 3, caractérisé en ce qu'une matrice enfermant pratiquement complètement un seul morceau ou des ensembles de morceaux du matériau à base de vieux caoutchouc est formée par le liant.

5. Procédé selon l'une des revendications 3 et 4, caractérisé en ce que le matériau à base de vieux caoutchouc vulcanisé, se présentant sous forme de petits morceaux, de la zone de noyau (22x) est lié avec de la chaleur et sous pression, au moyen d'un mélange de caoutchouc brut pouvant être vulcanisé.

6. Procédé selon l'une des revendications 1 et 3 à 5, caractérisé en ce que la zone de noyau (22x) est pratiquement totalement entourée par la peau de couverture (22y).

7. Procédé selon l'une des revendications 1 et 3 à 6, caractérisé en ce que la peau de couverture (22y) est liée au liant de la zone de noyau (22x) par vulcanisation.

8. Procédé selon l'une des revendications 1 et 3 à 7, caractérisé en ce que le liant de la zone de noyau (22x) et la peau de couverture (22y) sont durcis par vulcanisation et liés ensemble à partir du même mélange ou d'un mélange analogue de caoutchouc brut.

9. Procédé selon l'une des revendications 1 et 3 à 8, caractérisé en ce que la peau de couverture (22y) sur une surface latérale, subissant la sollicitation du trafic, est fabriquée avec une épaisseur de peau entre 1 mm et 10 mm, de préférence environ 5 mm.

10. Procédé selon l'une des revendications 5 à 9, caractérisé en ce que les morceaux du matériau à base de vieux caoutchouc vulcanisé, se présentant sous forme de petits morceaux, ont un spectre de dimensions des morceaux dans lequel les plus grands morceaux ont une taille de 5 mm à 8 mm, de préférence environ 7 mm.

11. Procédé selon l'une des revendications 1 à 10, caractérisé en ce que le matériau à base de vieux caoutchouc, se présentant sous forme de petits morceaux est formé par broyage de corps moulés en vieux caoutchouc, tels que des revêtements de pneumatiques.

12. Procédé selon l'une des revendications 5 à 11, caractérisé en ce que la proportion en poids du matériau à base de vieux caoutchouc dans la zone de noyau (22x) est de 70 % à 90 %, de préférence environ 85 %.

13. Procédé selon l'une des revendications 1 à 4, 6, 7, 9 et 11, caractérisé en ce que le liant est formé par une matière synthétique thermoplastique.

14. Procédé selon l'une des revendications 1 à 4, 6, 7, 9, 11 et 13, caractérisé en ce que le liant est formé à base de déchets de matériau thermoplastique.

15. Procédé selon l'une des revendications 1 à 4, 6, 7, 9, 11, 13 et 14, caractérisé en ce que le liant est formé par un matériau thermoplastique à base de polyoléfine, en particulier à base de polyéthylène ou de polypropylène.

16. Procédé selon l'une des revendications 2 à 4, 6, 7, 9, 11 et 13 à 15, caractérisé en ce que le matériau à base de vieux caoutchouc vulcanisé, se présentant sous forme de petits morceaux, présente un spectre de taille dans lequel les plus grands morceaux ont une taille de 1 mm à 3 mm, de préférence d'environ 2 mm.

17. Procédé selon l'une des revendications 2 à 4, 6, 7, 9, 11 et 13 à 16, caractérisé en ce que la proportion en poids du matériau à base de vieux caoutchouc vulcanisé, se présentant sous forme de petits morceaux, est de 40 % à 60 %, de préférence d'environ 50 %, et la proportion en poids du liant thermoplastique est de 60 % à 40 %, de préférence d'environ 50 %.

18. Procédé selon l'une des revendications 1 à 17, caractérisé en ce qu'au moins une zone de surface soumise à la sollicitation du trafic du corps moulé est pourvue d'un profilage superficiel (32).

19. Procédé selon la revendication 18, caractérisé en ce que l'on prévoit comme profilage superficiel (32) un dessin à losanges.

20. Procédé selon l'une des revendications 1 à 19, caractérisé en ce que l'on munit une zone superficielle soumise à la sollicitation du trafic du corps moulé avec des clous ou des pointes (22v).

21. Procédé selon l'une des revendications 1 à 20, caractérisé en ce que, dans une zone de volume éloignée de sa surface soumise à la sollicitation du trafic, le corps moulé est réalisé avec des cavités (164) réduisant le poids.

22. Procédé selon l'une des revendications 1, 3 à 12 et 18 à 21, caractérisé en ce que l'on introduit le mélange de matériau à base de vieux caoutchouc vulcanisé, se présentant sous forme de petits morceaux, et de liant dans le moule (48), à une température suffisante pour l'essentiel pour le durcissement du liant et en ce qu'on amène la chaleur nécessaire pour la vulcanisation de la couche de caoutchouc brut (52) essentiellement à travers les parois de moule (48a, 48b).

23. Procédé selon l'une des revendications 1 et 3 à 22, caractérisé en ce que l'on dispose dans un moule inférieur (48a) une couche en caoutchouc brut (52) contenant un produit de vulcanisation, en ce qu'on remplit le moule inférieur (48a) ainsi recouvert avec le mélange composé du matériau à base de vieux caoutchouc vulcanisé, se présentant sous forme de petits morceaux, et de liant, en ce qu'on recouvre la face supérieure du mélange contenu dans le moule par une autre couche (54) de caoutchouc brut contenant un produit de vulcanisation, en ce qu'on referme les couches (52, 54), le cas échéant par chevauchement, puis en ce que l'on fait agir un moule supérieur (48b) avec une pression, sur le contenu du moule inférieur (48a).

24. Procédé selon l'une des revendications 1 et 3 à 23, caractérisé en ce que l'on mélange le matériau à base de vieux caoutchouc vulcanisé, se présentant sous forme de petits morceaux, et le liant dans un mélangeur à vis (38).

25. Procédé selon l'une des revendications 2 à 4, 11 et 13 à 21, caractérisé en ce que l'on broie du matériau thermoplastique en feuille dans un dispositif de hachage (168), en accompagnant d'un chauffage apporté par l'énergie mécanique de hachage, en ce que l'on ajoute par mélange au produit haché broyé le matériau à base de vieux caoutchouc vulcanisé, se présentant sous forme de petits morceaux, en ce que l'on mélange le mélange obtenu dans un mélangeur à vis (178) et en ce que l'on introduit le mélange plastique dans le moule (182a, 182b).
